# EUROPEAN PATENT APPLICATION

(11) **EP 3 992 872 A1**
(43) Date of publication of application: **04.05.2022**
(21) Application number: 20205986.1
(22) Date of filing: 05.11.2020
(51) Int. Cl.: G06Q 10/00, G06Q 10/06, G06Q 10/08, G06Q 50/04

(54) **METHOD FOR ENHANCING SECURITY FOR THE ASSURANCE OF TRUSTWORTHINESS OF A PRODUCT USING A SUPPLY CHAIN OF SUPPLIERS FOR MODIFYING, ENHANCING OR PRODUCING THE PRODUCT**

(30) Priority: 28.10.2020 EP 20204328
(71) Applicant: Siemens Aktiengesellschaft, 80333 München (DE)
(72) Inventor: Klasen, Wolfgang, 85521 Ottobrunn (DE); Maftun, Aliza, 81549 München (DE)

(57) **Abstract**

The computer-implemented method for enhancing security of a product using a supply chain of suppliers for modifying, enhancing or producing the product comprises the step of consulting at least one security information dataset, that comprises at least one security provision datum of at least one supplier and at least one security provision datum of the supplier's supplier.

## Description

The demand for supply chain transparency is rapidly growing as it helps companies to maintain safety and quality standards, minimize risks and build consumer confidence. The manufacturers demand such transparency along the supply chain as it allows them to make better-informed decisions about their business strategies, investment risks, purchases and regulatory requirements.

A supply chain comprises mutual relations of suppliers and supplied entities, which are typically independent market entities. Having several independent entities involved in a supply chain, it is a technical challenge to create transparency while respecting sufficient privacy of each entity.

Usually, a product produced with a supply chain comprises several components and subcomponents. At present, for every participant within the supply chain, especially for the entity finally producing the product or the customer of the product, it is desired to determine security relevant properties of each component and subcomponents. Currently, participants choose between either privacy of each participant in the supply chain or transparency along the supply chain. This choice makes enhancing security along a supply chain of suppliers directed to a product difficult.

Thus, to solve this problem, it is the aim of the invention to provide a method for enhancing security of a product using a supply chain of suppliers for modifying or producing the product. Furthermore, it is the aim of the invention to provide a more secure method for producing, enhancing or modifying a product.

These aims of the invention are addressed by a method with the features listed in claim 1 and by a method with the features listed in claim 11. Preferred aspects and embodiments of the invention are contained in the dependent claims, in the description below and in the drawings.

The method according to the invention is a method for enhancing and applying security in a supply chain for modifying or producing the product. In other words, in the method according to the invention, the supply chain is used for modifying, preferably enhancing, or producing the product and the security of the product produced is enhanced using the supply chain. The method according to the invention comprises the step of consulting at least one security information dataset, that comprises at least one security provision datum of at least one supplier and at least one security provision datum of a supplier's supplier. Preferably, the consulted at least one security provision datum of the supplier and the security provision data of the supplier's supplier are used in the method for enhancing the security by guaranteeing the security or for enhancing the security by further measures due to the consulting of the at least one security provision of at least one supplier datum and the security provision datum of a supplier's supplier.

The invention may be carried out consulting and extending datasets that comprise at least a security provision datum of at least one supplier. One example of such a dataset is the so-called trustworthiness profile as proposed by a joint collaboration of the German "Plattform Industrie 40.0" (https://www.plattform-i40.de/PI40/Navigation/EN/Home/ home.html) and the Japanese "Robot Revolution Initiative" (https://www.jmfrri.gr.jp/english/). The trustworthiness profile contains a list of trustworthiness capabilities of the supplier. Such trustworthiness capabilities of the supplier may contain a security provision datum according to the invention. The trustworthiness profiles may - according to the invention - now be extended such that at least one security provision datum of the supplier's supplier is added to the trustworthiness profile belonging to the supplier. With such an extended trustworthiness profile, the invention may be carried out.

The invention introduces a novel addition of at least one security provision datum to a security information dataset that can be used to exchange security relevant properties. These security relevant properties are essential for the establishment of trustworthiness between suppliers and supplied entities of the supply chain which are supplied by the suppliers. The invention helps to develop a trustworthy ecosystem as security-relevant security provision data by suppliers and the security of supplied components may be established, maintained, and documented. The method of the invention advantageously enables a more secure production or modification of a product using a supply chain.

Preferably, the method according to the invention comprises the additional step of consulting such an at least one security information dataset, that additionally comprises at least one security demand datum of at least one supplied entity of the supply chain. The method according to the invention additionally comprises the step of matching or comparing the at least one security demand datum of the supplied entity and the at least one security provision datum of the supplier's supplier. Preferably, the supplied entity is, ideally directly, supplied by the supplier, while the supplier is supplied by the supplier's supplier.

In this aspect of the invention the security dataset in the form of the above-mentioned trustworthiness profile may again be consulted for carrying out the invention. A trustworthiness profile as explained above typically contains trustworthiness expectations that may be utilized as a security demand datum or security demand data. Security demand data can be checked with the trustworthiness capabilities for matches. Preferably, the security of the supply chain is guaranteed or confirmed if the security demand datum or security demand data of the supplier and the security demand datum or security demand data of the supplier's supplier/s match the security provision datum or security provision data. Otherwise, the security cannot be confirmed and the supplier supplying the supplied entity can be exchanged with a supplier with a more conformant supplier's supplier and/or the supplier's supplier can be exchanged with a more conformant supplier's supplier and/or the use of the supply chain for modifying, enhancing or producing the product may be stopped. In an optional and advantageous aspect of the invention, these steps, particularly exchanging the supplier's supplier and/or the supplier and/or stopping using the supply chain, depending on the match of the at least one security demand datum and the at least one security provision datum of the supplier's supplier, are part of the method according to the invention.

In an advantageous aspect of the invention, the method comprises the additional steps of consulting at least one or more additional security information datasets, for which the supplier's supplier assumes the role of the supplier and a supplier of the supplier's supplier assumes the role of the supplier's supplier.

Preferably, the supplier assumes the role of the entity. In this advantageous aspect of the invention, the consultation of security datasets may be cascaded along the supply chain. Ideally, security provision data from each participant in a part or the entirety of the supply chain may be consulted. That way, security is ensured along the part of the entirety of the supply chain.

In an preferable aspect of the invention, the method comprises the additional steps of consulting security datasets, that - consulted together - contain security provision data of all suppliers upstream along the supply chain with respect to one participant of the supply chain and/or upstream to the product.

In this aspect of the invention, the security of the whole part of the supply chain that is located upstream to the participant or even the whole supply chain may be guaranteed. Preferably, the method is carried out by this one participant or by a producer of the product using the supply chain for producing the product.

In the method according to the invention, in a further advantageous aspect, the security provision datum of the supplier's supplier is required and/or validated by the supplier.

In this aspect of the invention, the supplier may be treated as a vouching party for the validity of the security provision datum or data and may be held accountable, e.g. via a specific passus of a contract.

In another advantageous aspect of the method according to the invention, the security provision datum of the supplier's supplier is validated with a cryptographic signature.

In this advantageous aspect of the invention, the authenticity and originality of the security provision datum or data is guaranteed by the cryptographic signature. Particularly, the security datum cannot be manipulated without any participation of the supplier in the manipulation. Thus, the invention can be carried out in a tamper-proof manner.

According to a further preferred aspect of the method according to the invention, the security provision datum of the supplier's supplier comprises a private and a public section.

This advantageous aspect of the invention addresses privacy concerns of supplier's suppliers that may not want to publicly disclose information such as their identity along the whole supply chain. Some data can be kept in privacy and preferably these data can be shared only with the participants of the supply chain that are directly supplied by the supplier's supplier, in this terminology the supplier that is supplied by the supplier's supplier.

In the method according to the invention, the private section includes preferably at least an identity of a supplier's supplier.

This advantageous aspect of the invention allows the supplier's supplier to keep its identity secret for most participants of the supply chain and share information about its identity only with selected participants in the supply chain such as suppliers directly supplied by the supplier's supplier. Thus, the identity of participants in the supply chain may be kept private and at the same time security provision data may be traceably shared or linked with other participants along the supply chain.

Preferably, the method according to the invention is a computer-implemented method. In this aspect, the method according to the invention may be carried out in an automized manner by a computer running a computer program or by a network of computers, such as a cloud network, running the computer program. Particularly, the security information dataset may be realized as a dataset stored on a computer or a cloud of computers. The generation and/or modification and/or read-out of security information datasets and security demand data and security provision data may be realized by computer program products such as software products that run on or more computers preferably owned or operated by the supplied entity, the suppliers and supplier's suppliers, respectively. Preferably, the exchange of security information datasets, security demand data and security provision data may be carried out via transmission between computers of the supplied entity, the suppliers and supplier's suppliers, e.g. via the internet. Preferably, the consultation of the security information dataset is automized using a computer program product such as a software.

In an advantageous aspect of the method according to the invention, the security provision datum of the supplier's supplier comprises at least one of the following data: a conformance with a patch management and/or a conformance with data privacy and/or a conformance with data encryption, e.g. of a software module or a hardware module of the product with a predetermined encryption strength, and/or a conformance with communication security. The security provision data may include specific degree of conformance, such as full conformance with a specific industrial standard, for example IEC 62443 and/or ISO/IEC 27001 and/or NIST SP 800-53.

In the method for producing or modifying a product according to the invention a supply chain is used for producing or modifying the product, that comprises the step of enhancing the security in using the supply chain with a method for enhancing security using a supply chain of suppliers as described above.

It is further understood that the phrase "security" in this context means "IT security" or "cyber security".

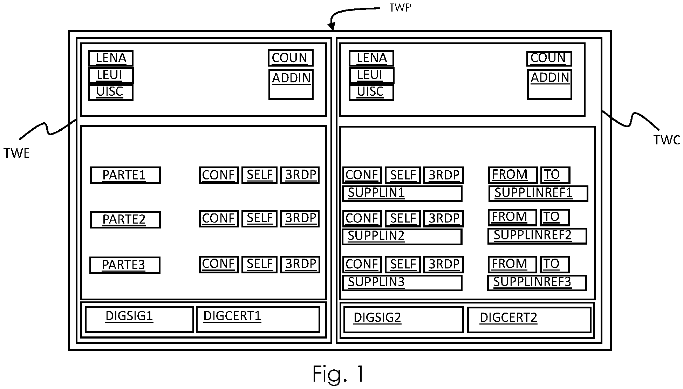

In the following, preferred embodiments of the invention are described in a more detailed manner with the help of the drawings. The drawings show in
- fig. 1: a schematic view of a trustworthy profile that constitutes a security information dataset comprising security provision data of a supplier and security provision data of a supplier's supplier used in the method for enhancing security of a product using a supply chain of suppliers for modifying or producing the product according to the invention and in
- fig. 2: a schematic depiction of a supply chain comprising cryptographically linked security information datasets according to fig. 1 used in the method according to the invention.

The method according to the invention in the embodiment described below guarantees the security of a product by receiving certified security information along a supply chain of suppliers that modifies or produces the product. For conducting this method, a security information dataset is consulted for receiving the certified security information in a safe and temper proof manner.

In the embodiment described below, a supply chain SUPCHA is constituted by a chain of participants (a participant may be named as entity ENT, or a supplier SUP or a supplier's supplier SUPSUP in what follows) that contribute components to the final product or that contribute the final product. In the example described above, the most downstream element of the supply chain is named as an entity ENT supplying the final product. In the upstream direction of the supply chain SUPCHA participants SUP, SUPSUP contribute components to the product.

The used security information dataset is realized by a trustworthiness profile TWP, that has recently been proposed in a whitepaper. The trustworthiness profile TWP is being developed jointly by the German Initiative "Plattform Industrie 4.0" (https://www.plattform-i40.de/PI40/Navigation/EN/Home/ home.html) and the Japanese Robot Revolution Initiative (https://www.jmfrri.gr.jp/english/) .

The trustworthiness profile TWP supports a systematic exchange of the expectations of an entity ENT and corresponding potential capabilities of the supplier SUP that are essential for establishment of trust between the entity ENT and the supplier SUP. The entity ENT and the supplier SUP are part of a supply chain SUPCHA for producing the product. The entity ENT in the supply chain SUPCHA relies on a supply of components of the product by a supplier SUP of this specific entity ENT. In other words, the entity ENT is a buyer of components of the supplier ENT. In this described example, the compliance of the components of the supplier SUP with security relevant conditions is essential for the security of the product resulting from the supply chain SUPCHA. The trustworthiness profile TWP in the embodiment described in this application lists these security relevant conditions in the form of so-called trustworthiness expectations TWE for the entity ENT which form security demand data of the entity ENT. The trustworthiness expectations TWE contain the security relevant conditions PARTE1, PARTE2, PARTE3. In this example, the product is a cyber-physical system and the security relevant conditions PARTE1, PARTE2, PARTE3 denote the compliance of the components of the supplier SUP, which represent modules of a control software for the cyber-physical system, with a regular patch management (PARTE1), with system hardening features and configurations (PARTE2) and a compliance of the modules with data privacy considerations, e.g. by encryption with at least a certain or predefined minimum encryption strength (PARTE3), according to a published industrial standard, requirement, or legal regulation, respectively.

In order to agree on a supply contract between the entity ENT and the supplier SUP for supplying the components to the entity ENT, the entity ENT adds identifying information about the entity ENT such as its name LENA and a unique identifier LEUI of the entity ENT in a unique identifier scheme UISC, e.g. a link to the LEI code repository or the VATIN scheme by DUNS or the NA scheme by TSE or any other suitable unique identifier scheme. In addition, the entity ENT adds country information COUN, the trustworthiness expectations TWE are formulated for and additional information ADDIN. The entity ENT signs the trustworthiness expectations TWE with a digital signature DIGSIG1 according to a digital certificate DIGCERT1 and sends the digitally signed trustworthiness expectations TWE for this supply contract along with other technical product specifications to the potential supplier SUP.

In turn, the supplier SUP responds with a submission of its corresponding conformances with the trustworthiness expectations TWE as so-called trustworthiness capabilities TWC. In these trustworthiness capabilities TWC, for each security relevant condition PARTE1, PARTE2, PARTE3, the supplier indicates its level of conformance with a confirming or failing indication of conformance CONF and - if conformance CONF is confirmed - whether the conformance CONF results from a self-assessment SELF of the supplier SUP or from a third party assessment 3RDP. Additionally, the trustworthiness capabilities TWC comprise a field FROM for a proof datum, such as a reference, e.g. a PDF document or an URL to a proving document, that proves the conformance with the individual security relevant condition and an end date TO the proof of the supplier SUP of the conformance with each security relevant condition PARTE1, PARTE2, PARTE3 ceases to be valid on. These trustworthiness capabilities TWC represent security provision data in the meaning of the present invention. The supplier SUP also adds identifying information for an identification of the supplier SUP, such as its name LENA and a unique identifier LEUI of the supplier SUP in a unique identifier scheme UISC, e.g. a link to the LEI code repository or the VATIN scheme by DUNS or the NA scheme by TSE or any other suitable unique identifier scheme. In addition, the supplier SUP adds country information, the conformance with the security relevant conditions PARTE1, PARTE2, PARTE3 is guaranteed for and additional information ADDIN. The supplier SUP signs the trustworthiness capabilities TWC with a digital signature DIGSIG2 according to a digital certificate DIGCERT2 and sends the digitally signed trustworthiness capabilities TWC for this supply contract to the entity ENT.

In principle, the entity ENT can now check, whether the trustworthiness expectations TWE and the trustworthiness capabilities TWC match.

According to the method according to the invention, however, the trustworthiness profile TWP does not only involve security provision data of the supplier, but additionally comprise security provision data of the supplier's SUP supplier.

The security provision data of the supplier's supplier are contained in the trustworthiness capabilities TWC as additional data fields SUPPLIN1, SUPPLIN2, SUPPLIN3, which indicate, whether or not the supplier's SUP suppliers conform to the security relevant conditions PARTE1, PARTE2, PARTE3, respectively.

In addition, the security provision data in the trustworthiness capabilities TWC contain for each data field SUPPLIN1, SUPPLIN2, SUPPLIN3 references SUPPLINREF1, SUPPLINREF2, SUPPLINREF3 to supplier's SUP supplier profiles, which also each comply with the trustworthiness profile TWP and are in turn formulated as trustworthiness capabilities TWP of the supplier's SUP suppliers. With these security provision data, the entity ENT can easily check, whether the supplier's SUP suppliers also conform with the security relevant conditions PARTE1, PARTE2, PARTE3 of the entity ENT.

With these security provision data of the supplier's supplier, the conformance with the trustworthiness capabilities TWC can be ensured one step further along the supply chain.

The references SUPPLINREF1, SUPPLINREF2, SUPPLINREF3 to the supplier's SUP supplier profiles are realized in the depicted example with a link to the storage of the respective trustworthiness profile TWP that contain the respective trustworthiness capabilities TWC. Alternatively, the references SUPPLINREF1, SUPPLINREF2, SUPPLINREF3 may be realized as encrypted and/or zipped trustworthiness profiles TWP. That way, the trustworthiness capabilities TWC of the supplier's SUP suppliers can be linked to the trustworthiness profile TWP including the trustworthiness capabilities TWC of the supplier SUP, offering a proof and traceable documentation.

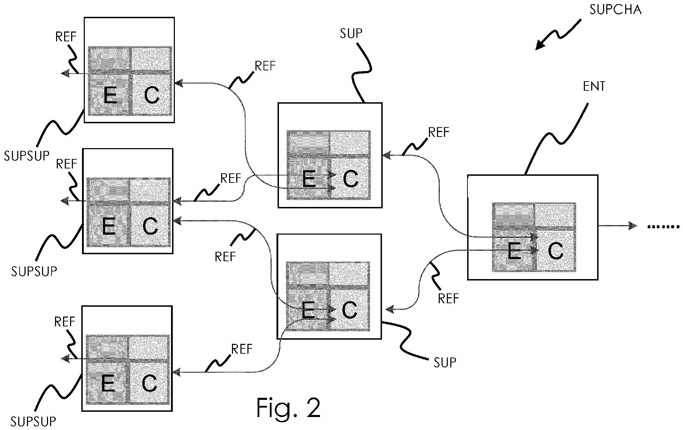

This reference of the trustworthiness profile TWP of the supplier SUP with the trustworthiness profiles TWP of the supplier's SUP suppliers can be extended across the whole supply chain SUPCHA as illustrated in fig. 2.

With reference to fig. 2 the trustworthiness capabilities TWC are alternatively labelled with "C" and the trustworthiness expectations TWE are alternatively labelled with "E".

The supply chain depicted in fig. 2 shows an entity ENT that produces a product (the product is not shown in fig. 2). The entity ENT is supplied by suppliers SUP with components. Each of the suppliers SUP are again supplied by supplier's SUP suppliers SUPSUP with components. With the additional data fields SUPPLIN1, SUPPLIN2, SUPPLIN3 and the references SUPPLINREF1, SUPPLINREF2, SUPPLINREF3 (in figure 2 shortly depicted as REF) to the trustworthiness profile TWP of the supplier's SUP suppliers SUPSUP representing the additional security provision data of the supplier's supplier, each supplied component product and its constituent components can be traceably proven as conformant with the security relevant conditions PARTE1, PARTE2, PARTE3.

In the depicted example, it is the supplier SUP that guarantees the supplier's sup supplier's SUPSUP conformance with the security relevant conditions. E.g. the trustworthiness profile TWP of the supplier SUP includes a hash value of the trustworthiness capabilities TWC listed in the trustworthiness profile TWP of the supplier's SUP suppliers SUPSUP. The same relation may be shifted along the entire supply chain SUPCHA. E.g. the suppliers SUP may assume the role of the entity ENT (with the exception, of course, that the suppliers do not produce the product). The supplier's suppliers SUPSUP assume the role of the suppliers SUP. Suppliers of the supplier's suppliers SUPSUP may then assume the role of the supplier's suppliers SUPSUP and so forth.

In the depicted example, privacy of the trustworthiness profile TWP of each supply chain SUPCHA entity ENT, SUP, SUPSUP is realized by dividing the trustworthiness profile TWP into a protected area and a non-protected area (not explicitly shown in the drawings). Each entity ENT, SUP, SUPSUP may choose, which part of the TWP it wants to keep as protected and which part it wants to keep as unprotected. In the depicted example, the identity information, such as the name LENA and the unique identifier LEUI, are kept as a part of the protected area. The data owner, e.g. the supplier's SUP supplier SUPSUP can digitally sign the information of the protected area with a private key of a public-private-key pair and share the corresponding public key of the public-private-key pair with only the potential immediate buyer, here the supplier SUP. For privacy preservation purposes, the identity information of the supplier's SUP supplier SUPSUP can be protected or even left out from the reference REF, SUPPLINREF1, SUPPLINREF2, SUPPLINREF3 of the trustworthiness capabilities TWC of the supplier SUP submitted to the entity ENT.

The unprotected part of the trustworthiness profile TWP of the supplier's SUP suppliers SUPSUP comprises relevant trustworthiness expectations TWE and trustworthiness capabilities TWC. The Integrity of this unprotected part of the trustworthiness profile TWP is ensured with a cryptographic mechanism. In the depicted example, a hash of the trustworthiness profile TWP is attached to the trustworthiness profile of the supplier SUP. Alternatively, the trustworthiness expectations TWE and trustworthiness capabilities TWC can be digitally signed by the supplier's SUP supplier SUPSUP and the corresponding public key maybe shared with every stakeholder.

In this way, starting from the trustworthiness profile TWP of the last entity ENT of the supply chain SUPCHA, all trustworthiness capabilities TWC of each supplier SUP, SUPSUP of components within the supply chain SUPCHA can be traced back. Thus, a chain of trustworthiness capabilities TWC along the supply chain SUPCHA can be established. Additionally, if only trustworthiness capabilities TWC without identity information, such as the name LENA and the unique identifier LEUI, of suppliers SUP or supplier's suppliers SUPSUP and so forth are shared along the supply chain SUPCHA, the privacy of each previous entity is respected.

In further embodiments, the trustworthiness profiles TWP may also include an extension: this extension would provide role-based access to the confidential information along the supply chain SUPCHA. E.g. roles with such an access may be the roles of a toll inspector or of an end customer or of a distributor or of an integrator, or of a repair service provider or other roles. Each participant ENT, SUP, SUPSUP in the supply chain SUPCHA decides that what part of its trustworthiness profile TWP is shared to whom and how that information may be used. For example, a supplier SUP can allow its potential buying entity ENT to view the trustworthiness capabilities TWC of the trustworthiness profile TWP while the supplier SUP allows an audit company to view identity information such as a tax number and the name LENA and the unique identifier LEUI as an additional identifying information as well. The participant in the supply chain SUPCHA may also choose to either allow its direct downstream participant in the supply chain SUPCHA to communicate the trustworthiness capabilities TWC in the downstream participant's trustworthiness profile TWP or otherwise. For a role-based access control to different parts of information, different mechanisms can be used, such as customized access tokens (https://en.wikipedia .org/wiki/Access_token) or encryption with different keys (https://jis-eurasipjournals.springeropen.com/articles/ 10.1155/2008/179290) or others.

Therefore, the most downstream participant, here the entity ENT, of the supply chain SUPCHA or alternatively even the recipient of the product can trace back the conformance of the product with the security relevant conditions. Furthermore, each other participant SUP, SUPSUP of the supply chain SUPCHA may trace back the conformance of the components upstream of the participant while respecting the privacy of each more upstream participant.

It is understood that the product according to the present invention does not necessarily constitute a tangible or physical product but may also be constituted by a computer program product such as a software or a source code or machine code.

It is further understood that a component of a product may also be constituted by a software module.

In a preferred embodiment of the invention, the method as described above is carried out with a computer program product running on a computer or a network of computers such as a cloud computing on a cloud. Particularly, the security information dataset may be realized as a dataset stored on a computer. The generation, modification and read-out of security information datasets and security demand data and security provision data may be realized by computer program products such as software products that run on computers owned or operated by the supplied entity ENT, the suppliers SUP and supplier's SUP suppliers SUPSUP, respectively. The exchange of security information datasets, security demand data and security provision data may be carried out via transmission between computers of the supplied entity ENT, the suppliers SUP and supplier's SUP suppliers SUPSUP, e.g. via the internet. Preferably, the consultation of the security information dataset is automized using a software.

Not explicitly shown in the figures is the method for producing the product according to the invention. As discussed above, the supply chain SUPCHA is used for producing the product. The security of the product is enhanced while using the supply chain SUPCHA applying the method of enhancing the security of the product as described above. Particularly, if security demand data of supplied entities ENT are not met by security provision data of the supplier's SUP suppliers SUPSUP supplying the suppliers SUP that supply the supplied entity ENT, the suppliers SUP supplying the supplied entity ENT may be replaced by suppliers SUP that are supplied by more conformant supplier's SUP suppliers SUPSUP. Alternatively, the supplier's SUP suppliers SUPSUP may be replaced. Additionally, also the suppliers SUP supplying the supplied entity ENT may be replaced by more conformant suppliers SUP in case the security provision data of the suppliers SUP of the supplied entity ENT do not match the security demand data. Furthermore, if such replacements may not seem feasible or appropriate, producing and/or modifying the product may be stopped if security demand data of supplied entities ENT are not met by security provision data of the supplier's SUP suppliers SUPSUP supplying the suppliers SUP that supply the supplied entity ENT, since the enhancement of security seems not to be possible.

## Claims

1. Method for enhancing security of a product using a supply chain (SUPCHA) of suppliers (ENT, SUP, SUPSUP) for manufacturing or producing the product, comprising the step of consulting at least one security information dataset (TWP), that comprises
- at least one security provision datum (TWC) of at least one supplier (SUP) and
- at least one security provision datum (SUPPLIN1, SUPPLIN2, SUPPLIN3, SUPPLINREF1, SUPPLINREF2, SUPPLINREF3) of a supplier's supplier (SUPSUP).

2. Method according to one of the preceding claims, comprising the additional steps of consulting such an at least one security information dataset (TWP), that additionally comprises at least one security demand datum (TWE) of at least one supplied entity (ENT), and of matching the at least one security demand datum (TWC) of the at least one supplier (SUP) and the at least one security provision datum (SUPPLIN1, SUPPLIN2, SUPPLIN3, SUPPLINREF1, SUPPLINREF2, SUPPLINREF3) of the supplier's supplier (SUPSUP) with the security demand datum (TWE).

3. Method according to one of the preceding claims, comprising the additional steps of consulting at least one or more additional security information datasets (TWP), for which the supplier's supplier (SUPSUP) assumes the role of the supplier (SUP) and a supplier of the supplier's supplier (SUPSUP) assumes the role of the supplier's supplier (SUPSUP).

4. Method according to one of the preceding claims, comprising the additional steps of consulting security information datasets (TWP), that contain security provision data (TWC, SUPPLIN1, SUPPLIN2, SUPPLIN3, SUPPLINREF1, SUPPLINREF2, SUPPLINREF3) of all suppliers upstream along the supply chain (SUPCHA) with respect to one participant of the supply chain (SUPCHA) and/or upstream to the product.

5. Method according to one of the preceding claims, wherein the security provision datum (SUPPLIN1, SUPPLIN2, SUPPLIN3, SUPPLINREF1, SUPPLINREF2, SUPPLINREF3) of the supplier's supplier (SUPSUP) is validated by the supplier.

6. Method according to one of the preceding claims, wherein the security provision datum (SUPPLIN1, SUPPLIN2, SUPPLIN3, SUPPLINREF1, SUPPLINREF2, SUPPLINREF3) of the supplier's supplier (SUPSUP) is validated with a cryptographic signature.

7. Method according to one of the preceding claims, wherein the security provision datum (SUPPLIN1, SUPPLIN2, SUPPLIN3, SUPPLINREF1, SUPPLINREF2, SUPPLINREF3) of the supplier's supplier (SUPSUP) comprises a private and a public section.

8. Method according to one of the preceding claims, wherein the private section included at least an identity of the supplier's supplier (SUPSUP).

9. Method according to one of the preceding claims, which is computer-implemented.

10. Method according to one of the preceding claims, wherein the security provision datum (SUPPLIN1, SUPPLIN2, SUPPLIN3, SUPPLINREF1, SUPPLINREF2, SUPPLINREF3) of the supplier's supplier (SUPSUP) comprises at least one of the following quantities: a conformance with a patch management (PARTE1) and/or a conformance with data privacy (PARTE2) and/or a conformance with communication security (PARTE3) and/or an encryption with at least a minimum encryption strength.

11. Method for producing or modifying a product, wherein a supply chain (SUPCHA) is used for producing or modifying the product, the method comprising the step of enhancing the security of the product using the supply chain (SUPCHA) with a method according to one of the preceding claims.
